# EUROPÄISCHE PATENTANMELDUNG

(11) **EP 2 545 768 A1**
(43) Veröffentlichungstag der Anmeldung: **16.01.2013**
(21) Anmeldenummer: 11405285.5
(22) Anmeldetag: 15.07.2011
(51) Int. Cl.: A01K 13/00

(54) **Gamasche für Pferde**

(71) Anmelder: Tiszarovits, Monika, 8805 Richterswil (CH); Tiszarovits, Tibor, 8805 Richterswil (CH)
(72) Erfinder: Tiszarovits, Monika, 8805 Richterswil (CH); Tiszarovits, Tibor, 8805 Richterswil (CH)
(74) Vertreter: Frei Patent Attorneys

(57) **Zusammenfassung**

Eine erfindungsgemässe Gamasche (1) für Pferde weist ein Leuchtmittel mit mindestens einem lichtemittierenden Element - beispielsweise LED - sowie eine Batterie zum Versorgen des Leuchtmittels mit elektrischer Energie auf.

## Beschreibung

Die Erfindung betrifft Ausrüstungen für den Reitsport. Im Speziellen betrifft sie eine Gamasche für Pferde.

Auf Strassen und Wegen sind Pferd und Reiter Verkehrsteilnehmer und müssen entsprechende Vorschriften beachten. So muss bei knappem oder fehlendem Tageslicht sowohl der Reiter als auch das Pferd ausreichend signalisiert sein. Das Pferd soll von vorne, hinten und von der Seite gut sichtbar sein.

Bisweilen wird dieser Pflicht nachgekommen indem sowohl der Reiter als auch das Pferd mit reflektierenden Bändern versehen werden. Es gibt hierfür die verschiedensten Ausführungsformen: reflektierende Bänder können an Zaumüberzügen, Fesselbändern, Gamaschen, Hufglocken, Halsbändern, Schweifband etc. angebracht werden.

Bei diesen Lösungen kommt es nicht selten dazu, dass die oben angeführten reflektierenden Bänder aufgrund von Schmutzablagerung und Abnutzung nicht lange leuchten/reflektieren und daher regelmässig ersetzt werden müssen. Je nach Ausführungsform und Unterlage (bspw. direkt auf dem Fell des Pferdes) können die mit reflektierenden Bändern ausgestatteten Gegenstände während des Ausritts verrutschen. Wenn die reflektierenden Bänder nur auf die entsprechenden Gegenstände (bspw. Fesselband, Schweifleuchtband) aufgeklebt und nicht genäht sind lösen sich diese mit der Zeit aufgrund von Nässe und Abnutzung ab. Ausserdem leuchten reflektierende Bänder nur so stark, wie sie selber angeleuchtet werden. Wenn sie gar nicht oder nur schwach angeleuchtet werden ist dies nicht ausreichend, um gesehen zu werden und um optimale Sicherheit sowohl für Pferd als auch für Reiter zu gewährleisten. Bänder aus phosphoreszierendem Material leuchten unter Umständen nicht genügend weit und man kann sie somit als nicht ausreichend zum Zweck der Signalisierung betrachten.

Es ist Aufgabe der Erfindung, hier Abhilfe zu schaffen und ein Mittel für ein verlässlicheres sichtbar machen von Pferd und Reiter zu schaffen.

Diese Aufgabe wird erfindungsgemäss durch eine Gamasche für Pferde gelöst, welche ein Leuchtmittel mit mindestens einem lichtemittierenden Element - beispielsweise LED - sowie eine Batterie zum Versorgen des Leuchtmittels mit elektrischer Energie aufweist.

Gamaschen sind im Pferdesport heute üblich, da sie die empfindlichen Stellen des Pferdebeins schützen und bspw. bei Sprüngen die Verletzungsgefahr deutlich verringern. Gamaschen gehören daher oft zur Standardausrüstung im Reitsport. Sie sind sehr gut für die Plazierung der Leuchtmittel geeignet, da sie erstens oft ohnehin angezogen werden, zweitens in einer geeigneten Höhe über dem Boden sind und drittens die Bewegung der Pferdebeine mitmachen, was zu einer erhöhten Sichtbarkeit führt und mehr Aufmerksamkeit weckt.

Die erfindungsgemässe Gamasche kann ein Gamaschenteil aufweisen, das wie eine Gamasche der an sich bekannten Art ausgebildet ist und ein am Pferdebein für das Pferd möglichst angenehm anliegendes Gamaschen-Hauptteil, einen oder mehrere Befestigungsbändel oder ähnlich sowie ein Polster aufweisen. Das Gamaschen-Hauptteil und der/die Befestigungsbändel umgreifen zusammen das Pferdebein und können um dieses herum festgezurrt werden. Das Polster ist bspw. aussenseitig am Gamaschen-Hauptteil angebracht oder wird durch dieses gebildet und dient dem eigentlichen Schutzzweck. Das Leuchtmittel ist nun am Gamaschenteil, beispielsweise am Gamaschen-Hauptteil und/oder eventuell am Polster und/oder einem oder mehreren der Befestigungsbändel so befestigt, dass es auch dann nicht abfällt, wenn sich das Pferd beim Reitsport bewegt. Es kann bspw. mittels entsprechender Hilfsmittel am Gamaschenteil angenäht sein.

Das Leuchtmittel kann beispielsweise ein wasserdichtes, transparentes Schutzelement aufweisen, bspw. eine Kunststoffröhre, in deren Innern das bzw. die lichtemittierenden Elemente angeordnet ist/sind. Auch die Batterie kann sich innerhalb des Schutzelements befinden.

Die Batterie kann wiederaufladbar sein. Eine entsprechende Steckverbindung kann ggf. mit einer geeigneten Abdeckung versehbar sein und ggf. durch eine elektrische Leitung mit der im Innern des Schutzelements angeordneten Batterie verbunden sein.

Optional kann eine Schaltung vorgesehen sein, mittels welcher das Leuchtmittel automatisch aktiviert wird, wenn das Ladegerät nicht angehängt ist. Schaltungen, die diesen Anforderungen genügen, sind an sich bekannt, bspw. von Leuchten, die bei Stromausfall automatisch angehen. In diesen Ausführungsformen ist ein Schalter zum Ein- und Ausschalten des Leuchtmittels nicht nötig. In alternativen Ausführungsformen ist im Gegensatz dazu ein Schalter vorhanden, um das Leuchtmittel ein- und auszuschalten.

Das Leuchtmittel kann insbesondere so angeordnet sein, dass es, wenn die Gamasche angezogen ist, auf der Aussenseite des Pferdebeins zu liegen kommt. Wenn das Leuchtmittel entlang einer Längsrichtung ausgedehnt ist, kann es entlang der Längsachse der Pferdebeine, also in proximodistaler Richtung verlaufen.

Das Leuchtmittel kann insbesondere auch eine Mehrzahl von lichtemittierenden Elementen aufweisen, welche miteinander über ein Verbindungselement verbunden sind, welches auch die Stromversorgung (die Verbindung der einzelnen lichtemittierenden Elemente mit der Batterie) beinhaltet. Das Verbindungselement kann bspw. ein Flexprint sein. Als lichtemittierende Elemente sind bspw. LEDs bevorzugt, aufgrund des niedrigen Stromverbrauchs und der geringen für den Betrieb erforderlichen Spannung. Aber auch ein anderes elektrisch betriebenes Leuchtmittel ist denkbar, bspw. ein leuchtstoffröhrenartiges lichtemittierende Element oder eine Halogenleuchte etc..

Nachfolgend wird eine bevorzugte Ausführungsform der Erfindung anhand von Zeichnungen noch genauer beschrieben. In den Zeichnungen zeigen:
- Fig. 1 eine Ansicht eines linken und eines rechten Pferdebeins, je mit einer erfindungsgemässen Gamasche; und
- Fig. 2 eine Ansicht einer Gamasche im ausgerollten Zustand.

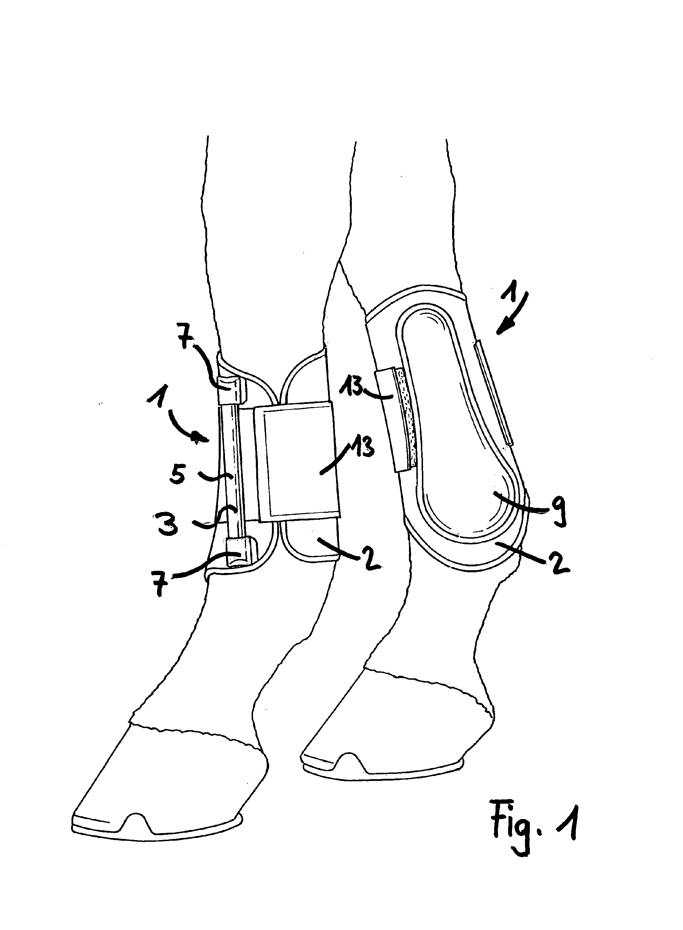

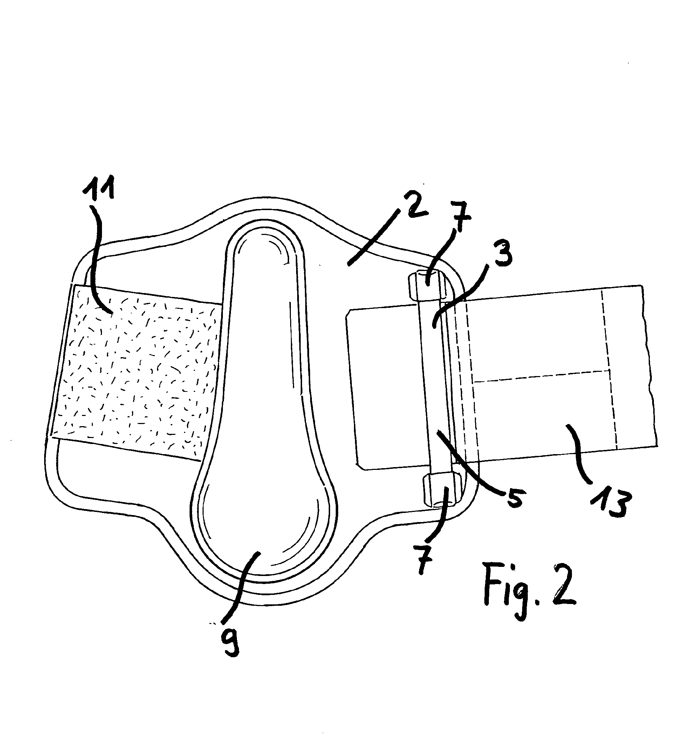

Das Pferd, von dem man in **Figur 1** nur die Vorderbeine vom Knie an abwärts sieht, trägt beidseitig je eine Gamasche 1, wie sie in **Figur 2** im ausgerollten Zustand von der Aussenseite her dargestellt sichtbar ist. Die Gamaschen 1 können von der an sich bekannten Art sein und ein Gamaschen-Hauptteil 2 und einen geeigneten Verschlussmechanismus - bspw. einen Klettverschluss - aufweisen. Aussenseitig an der Gamasche sieht man das Leuchtmittel 3. Dieses weist einen Witterungsschutz 5 (Schutzelement) in Form einer wasserdichten oder wasserabweisenden Röhre aus einem transparenten, optional transparent eingefärbtem Kunststoff auf.

Im Randbereich ist der Witterungsschutz durch eine geeignete Mantelpartie 7 gehalten. Die Mantelpartie ist am Gamaschen-Hauptteil 2 befestigt, bspw. mit diesem vernäht. Im Innern der Röhre ist einerseits mindestens eine Batterie angeordnet. Die Batterie kann sich beispielsweise unter der Mantelpartie im Innern des Witterungsschutzes befinden. Andererseits befinden sich dort mehrere LEDs, die in einer entlang des Witterungsschutzes verlaufenden Kette regelmässig angeordnet sind. Die LEDs sind auf einem Flexprint angeordnet, welcher gleichzeitig den Träger bildet und die LEDs elektrisch kontaktiert. Der Klettverschluss wird durch einen am Gamaschen-Hauptteil 2 flächig befestigte Befestigungsbändel 11 und ein mit einem unterseitig (in Bezug auf die in Fig. 2 dargestellte Orientierung) an einem Befestigungsbändel angebrachtes Widerhakenteil (oder umgekehrt) gebildet. In der dargestellten Ausführungsform verläuft der Befestigungsbändel 11 unter dem Leuchtmittel 3 hindurch.

Das Leuchtmittel ist so angebracht, dass es, wenn die Gamasche sachgerecht angezogen ist, aussenseitig verläuft. Innenseitig (in Bezug auf das Pferd) weisen die Gamaschen 1 je eine Polsterung 9 auf. Ein Leuchtmittel, welches dünner ist als dasjenige der hier beschriebenen Ausführungsform könnte auch um das Pferdebein herum verlaufen, also dieses mindestens teilweise umgreifen.

Anstelle eines Flexprints können die LEDs auch mit anderen Mitteln verbunden sein, bspw. durch ein Paar von isolierten Leiteradern, die wahlweise parallel, miteinander verdrillt oder mit einer gemeinsamen Hülle zu einem Kabel zusammengefasst sind.

Das Leuchtmittel kann optional weitere Mittel aufweisen, bspw. eine Schaltung, die ein ein-/ausschalten durch den Benutzer und/oder optional auch einen Blinkbetrieb ermöglichen kann. Auch ein Timer kann optional vorhanden sein; Kombinationen mit mechanischen Sensoren (bspw. einem Akzelerometer, welches das Leuchtmittel in Bewegung einschaltet, wenn es bewegt wird, etc.) sind möglich.

Die Batterie muss nicht notwendigerweise im Witterungsschutz vorhanden sein, sondern kann bspw. auch im Hauptteil der Gamasche eingenäht oder sonst wie platziert sein.

## Patentansprüche

1. An einem Pferdebein, insbesondere an einem Röhrenbein, befestigbare, dieses umgreifende Gamasche (1), **gekennzeichnet durch** ein Leuchtmittel (3) mit mindestens einem elektrisch betreibbaren lichtemittierenden Element und einer Batterie zur Versorgung des Leuchtmittels mit elektrischem Strom.

2. Gamasche nach Anspruch 1, **dadurch gekennzeichnet, dass** das Leuchtmittel (3) ein wasserdichtes, mindestens teilweise transparentes Schutzelement (7) aufweist.

3. Gamasche nach Anspruch 2, **dadurch gekennzeichnet, dass** das Schutzelement (7) Kunststoffröhre ist.

4. Gamasche nach einem der vorangehenden Ansprüche, **dadurch gekennzeichnet, dass** die Batterie wiederaufladbar ist.

5. Gamasche nach Anspruch 4, **dadurch gekennzeichnet, dass** das Leuchtmittel (3) eine Schaltung aufweist, die das mindstens ene lichtemittierende Element aktiviert, sobald das Leuchtmittel an keinem Ladegerät angeschlossen ist.

6. Gamasche nach einem der vorangehenden Ansprüche, **dadurch gekennzeichnet, dass** das Leuchtmittel entlang der Längsachse des Pferdebeins ausgedehnt ist und aussenseitig verläuft.

7. Gamasche nach einem der vorangehenden Ansprüche, **dadurch gekennzeichnet, dass** das Leuchtmittel (3) eine Mehrzahl von miteinander über ein Verbindungselement mit elektrischen Leitern verbundene lichtemittierende Elemente aufweist.

8. Gamasche nach einem der vorangehenden Ansprüche, **dadurch gekennzeichnet, dass** das lichtemittierende Element bzw. die lichtemittierenden Element eine LED ist bzw. LEDs sind.
